# EUROPEAN PATENT APPLICATION

(11) **EP 4 246 636 A1**
(43) Date of publication of application: **20.09.2023**
(21) Application number: 21891284.8
(22) Date of filing: 08.11.2021
(51) Int. Cl.: H01M 10/02, H01M 10/04, B60L 50/64

(54) **ELECTRICAL ENERGY STORAGE SYSTEM**

(30) Priority: 11.11.2020 ES 202031136
(71) Applicant: CAF Power & Automation, S.L.U., 20009 San Sebastian, Guipuzcoa (ES)
(72) Inventor: ARRATIBEL URDAMPILLETA, Aitor, 20009 San Sebastián (Gipuzkoa) (ES); AGUIRRE VIANA, Xabier, 20009 San Sebastián (Gipuzkoa) (ES); NAVARRO DEL VALLE, Alberto, 20009 San Sebastián (Gipuzkoa) (ES); LARREA AGUIRRE, Xabier, 20009 San Sebastián (Gipuzkoa) (ES); SISTIAGA SAMSÓ, Aitor, 20009 San Sebastián (Gipuzkoa) (ES); NIEVA FATELA, Txomin, 20009 San Sebastián (Gipuzkoa) (ES)
(74) Representative: Evens, Paul Jonathan
(86) International application number: PCT/ES2021/070800
(87) International publication number: WO 2022/101531

(57) **Abstract**

The invention relates to an electrical energy storage system comprising at least one electrical energy storage device (1) with at least one module (100) that comprises cells (101) for storing electrical energy, wherein the electrical energy storage system comprises galvanic isolation means configured to provide galvanic isolation between internal conductive elements of the at least one module (100) configured to be connected to high voltage and internal conductive elements of the at least one module (100) configured to be connected to low voltage and/or ground.

## Description

### Technical field

The object of the present invention is an electrical energy storage system specially designed to be applied in railway drive chains.

The electrical energy storage system object of the present invention allows its use in direct current railway power supply, where a non-isolated DC/DC conversion stage is used.

The electrical energy storage system object of the present invention also allows its use in railway power supply where there is no DC/DC conversion stage.

Thus, the electrical energy storage system object of the present invention incorporates, in itself, all the necessary isolation measures to guarantee the safety and integrity of the internal electronic equipment of the storage system, as well as safety against the electrical risk for a person who handles the electrical energy storage system object of the invention.

The electrical energy storage system object of the present invention is applicable in the field of the industry of design, manufacture, and operation of electrical energy storage systems, and more specifically, in on-board electrical energy storage systems in railway electric drive vehicles.

### State of the art

In the state of the art, railway electric drive vehicles frequently incorporate electrical energy storage units or systems, normally consisting of batteries and/or ultracapacitors.

By means of these electrical energy storage systems, it is possible to have a usable energy remnant, especially in those sections of the track where, due to the circumstances of the layout, there is no power supply from the overhead contact line, or for those circumstances in which the power supply from the overhead contact line is interrupted.

When the energy comes from an alternating current overhead contact line, the energy has to go through a previous stage of rectification to direct current, to be able to power and charge electrical energy storage systems.

Whether the power comes from an alternating current overhead contact line or a direct current overhead contact line, it is common for the electrical energy storage system to incorporate a DC/DC conversion stage between two direct current voltage levels, before being able to power/charge the batteries.

In many territories, the existing regulations relating to on-board railway electrical equipment in vehicles require that electrical energy storage systems incorporate a certain level of galvanic isolation between live active components and the components or parts of the system that must be at ground potential or low voltage. This is done in order to guarantee not only the safety of people who at any given time may handle electrical energy storage systems, but also to protect certain electronic components of the storage system, such as the battery management system (or BMS).

Existing regulations usually consider that the DC bus voltage at the inlet of the DC/DC converter is between 1,500 V and 3,000 V. For this voltage level at the inlet of the DC/DC converter, regulations require a certain level of galvanic isolation between high voltage components and low voltage components or grounded components.

The galvanic isolation required as per regulations is applied at the level of the DC/DC converter, which itself incorporates said isolation between the parts in electrical contact with the overhead contact line or with the outlet of the rectifier, and the parts in electrical contact with the inlet of the batteries or ultracapacitors. A good example of isolation of this type is auxiliary converters.
This solution presents the drawback of its high cost and the large size and weight of isolated DC/DC converters.

There is also an alternative used in trains powered by an AC overhead contact line with a rectifier, consisting of using a non-isolated DC/DC converter connected to the outlet of the rectifier at its midpoint, where the voltage at the outlet of the rectifier is divided in half, so that the 1,500 V bus at the outlet of the rectifier is divided into two 750 V buses, thus ensuring compliance with regulations regarding isolation of the storage system, since by guaranteeing that the voltage at the inlet of the DC/DC converter is below the minimum value for which the galvanic isolation requirement applies according to regulations, it is not necessary to apply an isolated DC/DC converter.

This solution is valid in cases where the voltage at the inlet of the DC/DC converter does not exceed 1,500 V in any of the DC buses connected to the inlet of the DC/DC converter. Otherwise, as already mentioned, the regulations require guaranteeing a certain level of galvanic isolation.

Regarding the level of galvanic isolation required by regulations, this usually implies guaranteeing a minimum separation distance in the air in a straight line (usually the term "clearance" is used to refer to this separation distance) between high-voltage components and low-voltage components of 18 mm. Moreover, regulations usually also imply guaranteeing a minimum separation distance on the surface (through insulating materials) between high-voltage components and low-voltage components of 26 mm. The term "creepage" is commonly used to refer to this separation distance.

As stated, the currently existing solutions imply either being able to guarantee that the voltage at the inlet of the DC/DC converter will not exceed 1,500 V (in which case the galvanic isolation requirement according to regulations does not apply), or using isolated DC/DC converters, with the high cost, weight and size of a DC/DC converter that this solution entails.

### Object of the invention

In order to solve the previously mentioned drawbacks, the present invention relates to an electrical energy storage system, particularly applicable in railway drive chains.

The electrical energy storage system object of the present invention comprises at least one electrical energy storage device (for example, a battery or a supercapacitor) with at least one module that comprises cells for electrical energy storage.

As a novelty, the electrical energy storage system object of the present invention comprises galvanic isolation means configured to provide galvanic isolation between internal conductive elements of the at least one module which are configured to be connected to high voltage, preferably to be connected directly to a bus of up to 3000VDC for railway applications and internal conductive elements of the at least one module which are configured to be connected to low voltage and/or to ground.

By means of this feature, it is possible for the electrical energy storage system to lack a DC/DC converter, or to include a non-isolated DC/DC converter, since the galvanic isolation means are included in each module of the electrical energy storage device.

According to a first aspect of the invention, the electrical energy storage device comprises a battery management system (BMS) comprising a master block and at least one slave block configured to control a status of the at least one module of the electrical energy storage device. As a novelty, the battery management system (BMS) comprises an isolation board provided with galvanic isolation means to provide galvanic isolation between each slave block and the master block.

By means of this feature, galvanic isolation is provided in the communication circuit between the master block and each slave block.

According to a possible embodiment, the isolation board comprises at least one transformer configured to provide galvanic isolation between a first internal communication bus with at least one slave block and a second internal communication bus with the master block.

As a result of the above feature, by correctly sizing the transformer, the isolation board can be configured specifically for each application, depending on the requirements demanded by each regulation relating to galvanic isolation.

According to a possible embodiment, the isolation board comprises a plurality of connection lines, wherein each connection line comprises:
- a first area configured to be connected to a communications bus for communication with at least one slave block; and
- a second area configured to connect to a communications bus for communication with the master block.

The first area of each connection line comprises the first internal bus connected between a first connection port and a primary circuit of the transformer. The second area of each connection line comprises the second internal bus connected between a second connection port and a secondary circuit of the transformer.

By means of this configuration of the isolation board, it is possible to independently connect each slave block with the master block or, if preferred, make a connection through a single connection line of the isolation board, to connect the master block with a single slave block, which can be connected in a daisy chain with the rest of the slave blocks.

According to a preferred embodiment, the isolation board includes galvanic isolation means between the first areas of each connection line.

This makes it possible to provide a higher level of isolation in communications, increasing the difficulty of short circuits occurring in the communications that are carried out by each connection line of the isolation board.

Optionally, the isolation board can comprise galvanic isolation means between the second areas of each connection line. Similarly to what has been described above, this feature helps to prevent short circuits from occurring in the communications that are carried out by each connection line of the isolation board.

According to a possible embodiment, the galvanic isolation means between the first areas and/or the second areas of each connection line of the isolating plate comprise a separation strip with electrically insulating material.

According to a possible embodiment, the master block comprises a microcontroller, one or more communication centers for communication with the slave blocks, and one or more transformer substations (for example, transformers) configured to provide galvanic isolation between a circuit in contact with the microcontroller and a communications circuit that exits the master block towards the slave blocks (300).

This feature provides additional galvanic isolation to that provided by the isolation board.

According to a possible embodiment, each slave block comprises a monitoring unit configured to monitor the status of a plurality of cells of the module, and a communication unit configured to communicate with the master block through at least one communication port. The slave block comprises a transformer unit (for example, a transformer) configured to provide galvanic isolation between the monitoring unit and the at least one communication port.

This feature also provides additional galvanic isolation to that provided by the isolation board.

Preferably, the battery management system (BMS) is configured so that the data emitted and received by the master block and by each slave block is structured according to the SPI communications protocol.

Also, preferably, the electrical energy storage device comprises galvanic isolation means between the master block and the power box of the electrical energy storage device.

As already mentioned, according to a possible embodiment, the electrical energy storage system comprises a DC/DC converter. This DC/DC converter in turn comprises an electronic control unit. The master block is connected to the electronic control unit.

Apart from the galvanic isolation described at the level of the battery management system (BMS), this electrical energy storage system also comprises other elements that provide galvanic isolation between internal conductive elements of the at least one module which are configured to be connected to high voltage, and internal conductive elements of the at least one module which are configured to be connected to low voltage and/or to ground.

Thus, according to a possible embodiment, each module of the electrical energy storage device comprises spacers configured to guarantee a minimum galvanic isolation distance between terminals to which there are connected cells of the module and other conductive components configured to be connected to ground potential.

A first variant of the spacer comprises a T-shaped geometry. This first variant of the spacer is configured to be arranged between two parallel rows of cells. An upper branch of the "T" (the horizontal branch) is arranged on the cells and a lower branch of the "T" (the vertical branch) is arranged between the cells of both rows. This first variant of the spacer makes it possible to guarantee a creepage, greater than a predetermined threshold, between the terminals of the module and a cold plate located between the two parallel rows of cells, as well as a clearance, greater than another predetermined threshold, between the terminals and a cover of the module.

A second variant of the spacer comprises a gamma-shaped geometry. This second variant of the spacer is configured to be arranged between a casing of the module and the cells. The upper branch of the "gamma" (the horizontal branch) is arranged on the cells and the lower branch of the "gamma" (the vertical branch) is arranged on a cold plate located on each side of the module, between the casing of the module and the cells. This second variant of the spacer makes it possible to guarantee a creepage, greater than a predetermined threshold, between the terminals and the cold plate located on each side of the module, as well as a clearance, greater than another predetermined threshold, between the terminals and the cover of the module.

According to a possible embodiment, each module of the electrical energy storage device comprises an isolating plug on the front part and rear part thereof. These plugs are configured to guarantee a creepage, greater than a predetermined threshold, between the terminals and the casing of the module.

According to another possible embodiment, each module of the electrical energy storage device comprises corner pieces made of insulating material to separate the cells with respect to conductive areas.

### Description of the Figures

As part of the explanation of at least one embodiment of the invention, the following figures have been included.
Figure 1 shows a diagram of an electrical energy storage system for a railway drive chain according to the state of the art, wherein an isolated DC/DC converter is used to adapt the voltage of the DC overhead contact line to the voltage level at the inlet of the electrical energy storage device.
Figure 2 shows a diagram of an electrical energy storage system for a railway drive chain according to the state of the art, wherein a non-isolated DC/DC converter and a non-isolated electrical energy storage device are used.
Figure 3 shows a diagram of an electrical energy storage system for a railway drive chain according to the present invention, wherein a non-isolated DC/DC converter and an isolated electrical energy storage device are used.
Figure 4 shows a perspective view of a module of an electrical energy storage device according to a possible embodiment of the electrical energy storage system object of the present invention.
Figure 5 shows a detail of the spacers located inside each module of the storage device according to a possible embodiment of the electrical energy storage system.
Figure 6 shows a detail of the isolation plugs located inside each module of the storage device according to a possible embodiment of the electrical energy storage system.
Figure 7 shows a detail of the corner pieces located inside each module of the storage device according to a possible embodiment of the electrical energy storage system.
Figure 8 shows a functional block diagram of the basic architecture of the electrical energy storage system object of the present invention.
Figure 9 shows a functional block diagram of the basic architecture of the battery management system (BMS) of the electrical energy storage system object of the present invention.
Figure 10 shows a diagram of a slave block of the battery management system (BMS).
Figure 11 shows a diagram of the communication between the master block and the slave blocks of the battery management system (BMS).
Figure 12 shows a block diagram of the communications isolation board for communication between the master block and the slave blocks of the battery management system (BMS).

### Detailed description of the invention

As previously mentioned, the present invention relates to an electrical energy storage system.

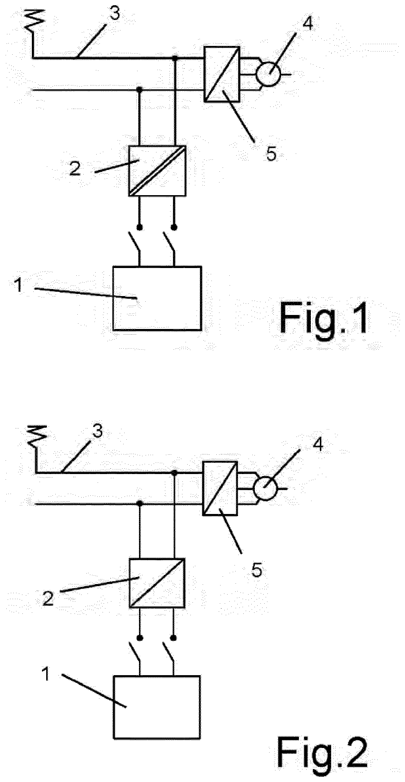

As previously mentioned, according to the state of the art, there are arrangements such as the one shown in Figure 1, wherein there is provided an electrical energy storage system comprising an electrical energy storage device (1) and an isolated DC/DC converter (2), all connected to a direct current (DC) overhead contact line (3) to which, in turn, a power unit (4) is connected through an inverter (5).

In current solutions, additional galvanic isolation is not required in the DC/DC converter because it is connected to a bus that guarantees that it will never exceed 1,500 V; there is an electrical energy storage system such as the one depicted in Figure 2, in which all the elements are analogous to those shown in Figure 1 but wherein the DC/DC converter does not comprise additional galvanic isolation.

According to the present invention, the galvanic isolation necessary to comply with existing regulations (which require said additional isolation from 1500V between high- and low-voltage components) is carried out at the level of the electrical energy storage device itself ( batteries or supercapacitors).

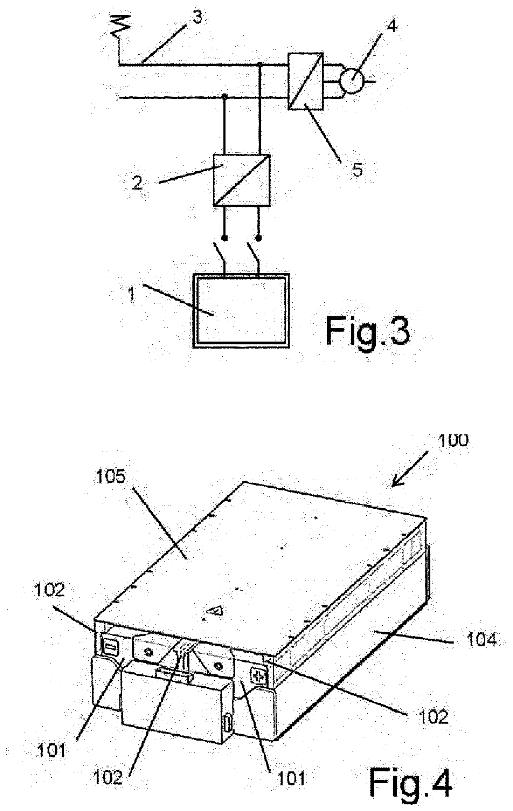

As shown in Figure 3, according to a possible embodiment of the invention, the electrical energy storage system incorporates an isolated electrical energy storage device (1) and a DC/DC converter (2). This electrical energy storage system is connected to a direct current (DC) overhead contact line (3) to which, in turn, a power unit (4) is connected through an inverter (5).

However, according to some possible embodiments, the electrical energy storage system object of the present invention may lack a DC/DC converter (2), so that the electrical energy storage device (1) would be connected directly to the power source.

The electrical energy storage device (1) can be based on a battery with a plurality of modules (100) connected in series or in parallel, wherein each module (100) comprises a plurality of cells (101) connected in series or in parallel.

Figure 4 shows a perspective view of one of the modules (100) of the electrical energy storage device (1). As depicted, the module comprises cells (101) arranged in two parallel rows.

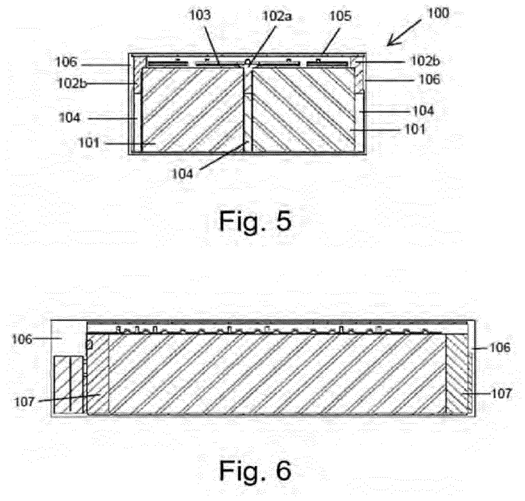

Figure 5 shows a sectional view of the module (100), wherein one cell (101) can be seen for each of the two parallel rows of cells (101) arranged inside the module (100).

The module (100) incorporates spacers (102) configured to guarantee a minimum galvanic isolation distance between the terminals (103) to which there are connected cells (101) and other conductive components that must be at ground potential, such as cold plates (104), for example, or the cover (105) of the module (100).

Specifically, there is a first variant (102a) of the spacer (102) that is arranged between the two parallel rows of cells (101). This first variant (102a) of the spacer (102) has a T-shaped geometry. The upper (horizontal) branch of the "T" is arranged on the cells (101) while the lower (vertical) branch of the "T" is arranged between the cells (101) of both rows. By means of this first variant (102a) of the spacer (102), it is possible to guarantee a minimum creepage of 26 mm between terminals (103) and the cold plate (104) located between the two parallel rows of cells (101). This first variant (102a) of the spacer (102) also makes it possible to guarantee the clearance.

Additionally, by means of this first variant (102a) of the spacer (102) it is possible to guarantee a minimum clearance of 18 mm between terminals (103) and the cover (105) of the module (100).

There is also a second variant (102b) of the spacer (102) that is arranged between each row of cells (101) and the cold plate (104) located on each side of the module (100).

This second variant (102b) of the spacer (102) has a gamma-shaped ("Γ") geometry. The upper (horizontal) branch of the "gamma" is arranged on the cells (101) of one row, while the lower (vertical) branch of the "gamma" is arranged on the cold plate (104) located on each side of the module (100), between the casing (106) of the module (100) and the cells (101) of each row of cells (101). By means of this second variant (102b) of the spacer (102), it is possible to guarantee a minimum creepage of 26 mm between terminals (103) and the cold plate (104) located on each side of the module (100). This second variant (102b) of the spacer (102) also makes it possible to guarantee the clearance.

Additionally, by means of this second variant (102b) of the spacer (102) it is possible to guarantee a minimum clearance of 18 mm between terminals (103) and the cover (105) of the module (100).

As shown in Figure 6, the module (100) comprises an isolating plug (107) on the front part and on the rear part thereof. These isolation plugs (107) are made of an electrically insulating material (for example, nylon). The isolation plugs (107) guarantee a minimum creepage of 26 mm between terminals (103) and casing (106) of the module (100).

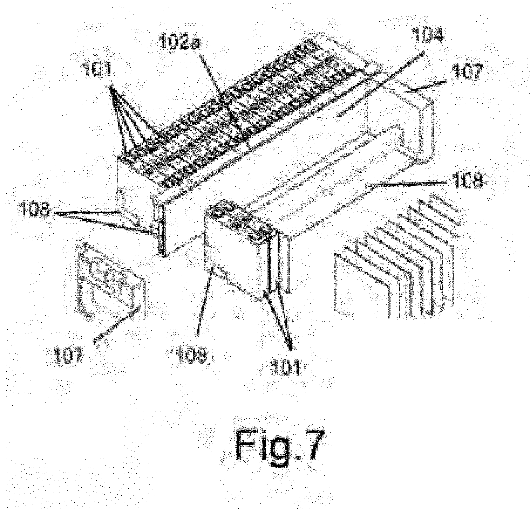

As shown in Figure 7, the module (100) also incorporates corner pieces (108) made of insulating material (e.g., kapton) to separate the cells (101) from conductive areas such as the screws of the module (100).

The electrical energy storage device (1) also incorporates isolation means to isolate the electronics of the battery management system (BMS) from the control electronics of the DC/DC converter (2).

Likewise, the electrical energy storage device (1) also incorporates isolation means in the electronics of the battery management system (BMS), to provide isolation in the communications between the master block (200) and the slave blocks (300), so as to guarantee galvanic isolation between the parts of the communication circuit placed in contact with the master block (200) and the parts of the communication circuit placed in contact with each slave block (300).

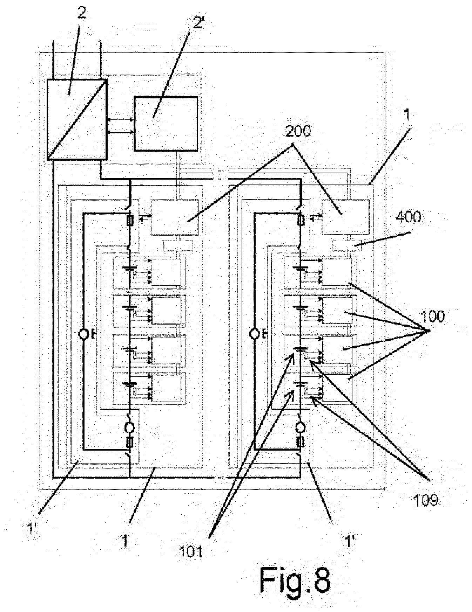

Figure 8 shows a functional block diagram of the architecture of the electrical energy storage system. It can be seen that the electrical energy storage system comprises a plurality of electrical energy storage devices (1) (e.g., batteries), of which the first and the last of said electrical energy storage devices (1) are depicted. These electrical energy storage devices (1) are connected to a DC/DC converter (2), which in turn has an electronic control unit (2') or ESCU (Energy Storage Control Unit).

Each of the electrical energy storage devices (1) has its power box (1'), which has the electrical power components necessary to control the charge and discharge of the electrical energy storage device (1).

In Figure 8, within each electrical energy storage device (1), the modules (100) are depicted, within which modules a cell (101) has been schematically depicted.

Also, within each module, there are one or more temperature sensors (109) (e.g., Negative Temperature Coefficient (NTC) thermistors), configured to measure the temperature at one or more points of each module (100).

Each electrical energy storage device (1) incorporates its own battery management system (BMS). This battery management system (BMS) comprises a master block (200). Likewise, the battery management system (BMS) comprises a slave block (300) in each module (100) of the electrical energy storage device (1).

Each slave block (300) receives the readings from the temperature sensors (109) of each module (100).

Each slave block (300) is in bidirectional communication with the master block (200), to send the readings of the temperature sensors (109) in each module (100).

Likewise, the master block (200) is configured to individually ask each slave block (300) to send their corresponding temperature readings. The master block (200) is also in bidirectional communication with the electronic control unit (2') of the DC/DC converter (2).

Finally, the master block (200) of each electrical energy storage device (1) is communicated with the power control module (1').

The battery management system (BMS) incorporates an isolation board (400) in the communication circuit between the master block (200) and the slave blocks (300). This isolation board (400) provides galvanic isolation (requiring, according to regulations, an additional level of isolation when the DC bus voltages exceed 1,500 V) between the master block (200) (normally in contact with high-voltage components, such as the electronic control unit (2') of the DC/DC converter (2)) and each slave block (300) (which is in contact with components subjected to the low voltage existing in each module (100) of the electrical energy storage device (1)).

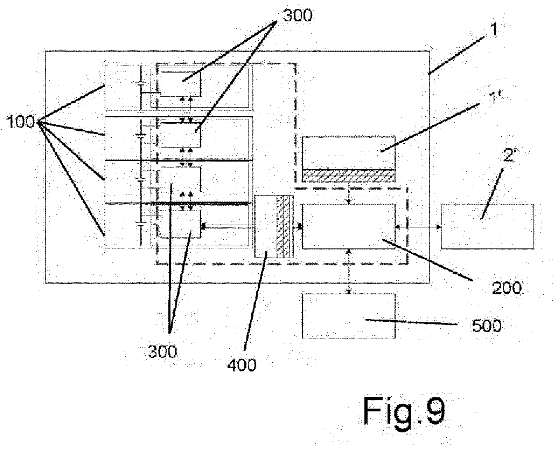

Figure 9 shows the battery management system (BMS) surrounded by a dashed line. The connection of the master block (200) in the power control module (1'), with the electronic control unit (2') of the DC/DC converter (2), and with a group of auxiliary electrical energy storage devices (500) is shown.

Figure 9 depicts, by means of a double hatched strip, the galvanic isolation provided by the isolation board (400), as well as a galvanic isolation also provided in the power control module (1').

The instructions or data sent and received in the master block (200) and in the slave blocks (300) take place, according to a possible embodiment, according to the SPI (Serial Peripheral Interface) protocol. According to possible embodiments, the communications connection between the slave blocks (300) and the master block (200) can be carried out in parallel or in a daisy chain.

Preferably, the communication between the master block (200) and the slave blocks (300) is carried out by means of differential communication. Thus, the instructions or data sent and received in the master block (200) and in the slave blocks (300) go through an encoding/decoding stage at the inlet/outlet of the master block (200) and the slave blocks ( 300), to be transmitted by means of isolated differential communication, isoSPI (isolated SPI).

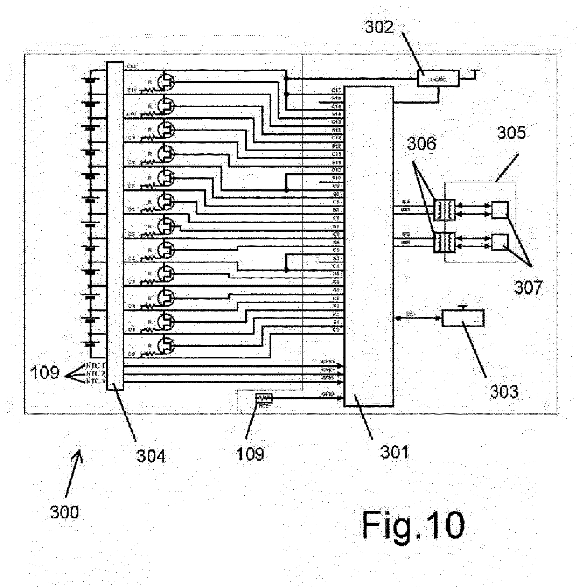

Figure 10 shows a diagram of one embodiment of a slave block (300) of the battery management system (BMS).

The slave block (300) comprises a monitoring unit (301) for monitoring the state of charge of the module (100) and the temperatures in the cells (101) of the module (100). This monitoring unit (301) is also called the ASIC (Application-Specific Integrated Circuit) "supply area". It is an integrated circuit that monitors the voltage in the cells (101), the temperature in same, executes the balancing commands and communicates with the master block (200) by means of isoSPI communications.

According to a possible embodiment, the slave block (300) is configured to manage up to twelve cells (101) in series (in order to guarantee extra low safety voltage at the level of the module (100)) and three temperature sensors. (109). It can administer lithium ion-based cells (101) of any chemical composition and is configured to allow serial connection with other slave blocks (300) by means of differential communication.

The slave block (300) can comprise a voltage conditioning unit (302), a balancing unit (304) for balancing the voltages and temperature of cells (101), a memory unit (303) (e.g., EEPROM) and a differential communication unit (305).

The connection with the memory unit (303) enables the individual identification of each slave block (300).

The communication unit (305) receives the data output from the monitoring unit (301), through a connection provided with galvanic isolation. Thus, the data output in differential SPI mode from the monitoring unit is transmitted from the communication unit (305) in isolated differential SPI mode (isoSPI).

Figure 10 shows the corresponding transformer units (306) which isolate the circuit in contact with the monitoring unit (301) from the communications circuit that exits the slave block (300) towards the master block (200) or towards the other slave blocks (300). Two communication ports (307) for the connection of the communication bus are also depicted.

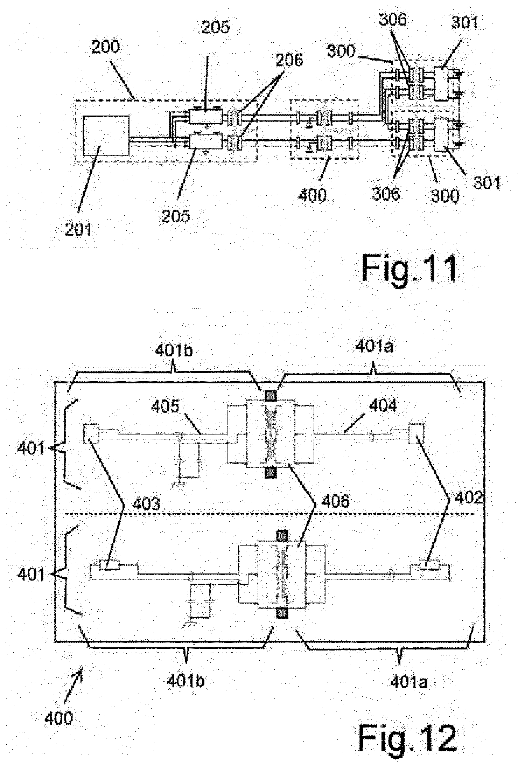

Figure 11 schematically depicts a diagram of the communication between the master block (200) and the slave blocks (300) of the battery management system (BMS). As can be seen, this communication is carried out through the isolation board (400) which provides enhanced galvanic isolation, which guarantees compliance with regulations relating to isolation in the event that the DC bus for charging the electrical energy storage devices (1) of the electrical energy storage system has a voltage equal to or greater than 1,500 V, and in the event that the DC/DC converter (2) is not isolated or in the event that there is no such DC/DC converter (2) in the electrical energy storage system.

As can be seen in Figure 11, the master block (200) comprises a microcontroller (201), one or more communication centers (205) for communication with the slave blocks (300), and one or more transformer substations (206) that provide galvanic isolation between the circuit in contact with the microcontroller (201) and the communications circuit that exits the master block (200) towards the slave blocks (300).

The master block (200) is configured to receive the voltage and current level measurements from the power box (1') and to provide commands to the actuators of the power box (1'). According to a possible embodiment, the master block (200) can communicate with up to 36 slave blocks (300) and thus monitor the state of charge, the state of conservation, of operation and the state of equilibrium of the modules (100) of the electrical energy storage device (1).

The master block (200) is also configured to communicate with the electronic control unit (2') of the DC/DC converter (2) through the CAN (Controller Area Network) communications protocol.

The great advantage of the communications architecture of the battery management system (BMS) according to the present invention, as depicted in Figure 11, is that the master block (200) and the slave blocks (300) can present a high degree of "standardization" for any application and for connection to a DC bus of any voltage level (typically between 1,500 V and 3,000 V).

In this way, knowing the specific application and the voltage level of the DC bus to which the electrical energy storage system object of the present invention is going to be connected, it will simply suffice to select the isolation board (400) that provides the galvanic isolation most suitable for the application.

Figure 12 schematically shows the architecture of the isolation board (400), according to a possible embodiment.

The isolation board (400) comprises a single connection line (401) or multiple connection lines (401), depending on whether each slave block (300) is directly connected to the master block (200) (this is the case of multiple connection lines (401)) or on whether slave blocks (300) are connected in a daisy chain, such that the master block (200) is connected to only one slave block (300) (the slave block (300) corresponding to the first module (100) of the electrical energy storage device (1)).

Preferably, regardless of the connection established between the master block (200) and the slave blocks (300), the isolation board (400) is factory-designed with a plurality of connection lines (401).

Each connection line (401) comprises a first area (401a) configured for connection with a slave block (300), and a second area (401b) configured for connection with the master block (200).

The first area (401a) of each connection line (401) comprises a first connection port (402) for connection with the communications bus (not depicted) for communication with the slave blocks (300).

The second area (401b) of each connection line (401) comprises a second connection port (403) for connection with the communications bus (not depicted) for communication with the master block (200).

The first area (401a) of each connection line (401) comprises a first internal bus (404) that connects the first connection port (402) with the primary circuit of a transformer (406).

The second area (401b) of each connection line (401) comprises a second internal bus (405) that connects the second connection port (403) with the secondary circuit of said transformer (406).

Thus, the transformer (406) is located between the first area (401a) and the second area (401b) of each connection line (401), and provides galvanic isolation between the first internal bus (404) and the second internal bus (405).

By means of the correct sizing of the transformer (406) of the isolation board (400), it is possible to adapt the isolation board (400) to the level of galvanic isolation necessary for each specific application, depending on the voltage level of the DC bus that feeds the electrical energy storage system.

Thus, depending on the specific application and the level of galvanic isolation required according to the regulations in force in each circumstance, a specific isolation board (400) is selected to provide the battery management system (BMS) with said necessary galvanic isolation.

Preferably, between the first areas (401a) of each connection line (401) of the isolation board (400), a galvanic isolation means is also provided, which may comprise a separation strip with electrically insulating material.

According to a possible embodiment, between the second areas (401b) of each connection line (401) of the isolation board (400), a galvanic isolation means is also provided, which may also comprise a separation strip with electrically insulating material.

## Claims

1. An electrical energy storage system comprising at least one electrical energy storage device (1) with at least one module (100) that comprises cells (101) for storing electrical energy, **characterized in that** the electrical energy storage system comprises galvanic isolation means configured to provide galvanic isolation between internal conductive elements of the at least one module (100) configured to be connected to high voltage and internal conductive elements of the at least one module (100) configured to be connected to low voltage and/or ground.

2. The electrical energy storage system according to claim 1, wherein the electrical energy storage device (1) comprises a battery management system (BMS) comprising a master block (200) and at least one slave block (300) configured to control a state of at least one module (100) of the electrical energy storage device (1), **characterized in that** the battery management system (BMS) comprises an isolation board (400) provided with galvanic isolation means to provide galvanic isolation between each slave block (300) and the master block (200).

3. The electrical energy storage system according to claim 2, **characterized in that** the isolation board (400) comprises at least one transformer (406) configured to provide galvanic isolation between a first internal communication bus (404) for communication with at least one slave block (300) and a second internal communication bus (405) for communication with the master block (200).

4. The electrical energy storage system according to claim 3, **characterized in that** the isolation board (400) comprises a plurality of connection lines (401), wherein each connection line (401) comprises:
- a first area (401a) configured to be connected to a communications bus for communication with at least one slave block (300); and
- a second area (401b) configured to be connected to a communications bus for communication with the master block (200);
wherein the first area (401a) of each connection line (401) comprises the first internal bus (404) connected between a first connection port (402) and a primary circuit of the transformer (406), and wherein the second area (401b) of each connection line (401) comprises the second internal bus (405) connected between a second connection port (403) and a secondary circuit of the transformer (406).

5. The electrical energy storage system according to claim 4, **characterized in that** the isolation board (400) comprises galvanic isolation means between the first areas (401a) of each connection line (401).

6. The electrical energy storage system according to claim 4 or 5, **characterized in that** the isolation board (400) comprises galvanic isolation means between the second areas (401b) of each connection line (401).

7. The electrical energy storage system according to claim 5 or 6, **characterized in that** the galvanic isolation means between the first areas (401a) and/or the second areas (401b) of each connection line (401) comprise a separation strip with electrically insulating material.

8. The electrical energy storage system according to any of claims 2 to 7, **characterized in that** the master block (200) comprises a microcontroller (201), one or more communication centers (205) for communication with the slave blocks (300), and one or more transformer substations (206) configured to provide galvanic isolation between a circuit in contact with the microcontroller (201) and a communications circuit that exits the master block (200) towards the slave blocks (300).

9. The electrical energy storage system according to any of claims 2 to 8, **characterized in that** each slave block (300) comprises a monitoring unit (301) configured to monitor the status of a plurality of cells (301) of the module (100), and a communication unit (305) configured for communication with the master block (200) through at least one communication port (307), wherein the slave block (300) comprises a transformer unit (306) configured to provide galvanic isolation between the monitoring unit (301) and the at least one communication port (307).

10. The electrical energy storage system according to any of claims 2 to 9, **characterized in that** the battery management system (BMS) is configured so that the data emitted and received by the master block (200) and by each slave block (300) is structured according to the SPI communications protocol.

11. The electrical energy storage system according to any of claims 2 to 10, **characterized in that** the electrical energy storage device (1) comprises galvanic isolation means between the master block (200) and a power control module (1').

12. The electrical energy storage system according to any of claims 2 to 11, **characterized in that** it comprises a DC/DC converter (2) with an electronic control unit (2'), wherein the master block (200) is connected to the electronic control unit (2').

13. The electrical energy storage system according to any of the preceding claims, **characterized in that** each module (100) of the electrical energy storage device (1) comprises spacers (102) configured to guarantee a minimum galvanic isolation distance between terminals (103) to which there are connected cells of the module (100) and other conductive components configured to be connected to ground potential.

14. The electrical energy storage system according to claim 13, **characterized in that** it comprises a first variant (102a) of the spacer (102) comprising a T-shaped geometry, wherein this first variant (102a) is configured to be arranged between two parallel rows of cells (101), wherein an upper branch of the "T" is arranged on the cells (101) and a lower branch of the "T" is arranged between the cells (101) of both rows, so that the first variant (102a) of the spacer (102) makes it possible to guarantee a creepage, greater than a predetermined threshold, between the terminals (103) of the module (100) and a cold plate (104) located between the two parallel rows of cells (101), as well as a clearance, greater than another predetermined threshold, between the terminals (103) and a cover (105) of the module (100).

15. The electrical energy storage system according to any of claims 13 or 14, **characterized in that** it comprises a second variant (102b) of the spacer (102) comprising a gamma-shaped geometry, configured to be arranged between a casing (106) of the module (100) and the cells (101), wherein an upper branch of the "gamma" is arranged on the cells (101) and a lower branch of the "gamma" is arranged on a cold plate (104) located on each side of the module (100), between the casing (106) of the module (100) and the cells, so that the second variant (102b) of the spacer (102) makes it possible to guarantee a creepage, greater than a predetermined threshold, between terminals (103) and the cold plate (104) located on each side of the module (100), as well as a clearance, greater than another predetermined threshold, between terminals (103) and cover (105) of the module (100).

16. The electrical energy storage system according to any of the preceding claims, **characterized in that** each module (100) of the electrical energy storage device (1) comprises an isolation plug (107) on the front part and rear part thereof, wherein said plugs (107) are configured to guarantee a creepage, greater than a predetermined threshold, between terminals (103) and casing (106) of the module (100).

17. The electrical energy storage system according to any of the preceding claims, **characterized in that** each module (100) of the electrical energy storage device (1) comprises corner pieces (108) made of insulating material to separate the cells (101) with respect to conductive areas.
